# EUROPÄISCHE PATENTSCHRIFT

(11) **EP 1 047 167 B1**
(45) Veröffentlichungstag und Bekanntmachung des Hinweises auf die Patenterteilung: **17.09.2003**
(21) Anmeldenummer: 99121185.5
(22) Anmeldetag: 22.10.1999
(51) Int. Cl.: H02B 1/50, H05K 9/00

(54) **Verteilerschrank**
Distribution cabinet
Armoire de distribution

(30) Priorität: 19.04.1999 DE 19917540; 16.06.1999 DE 19927517
(43) Veröffentlichungstag der Anmeldung: 25.10.2000
(73) Patentinhaber: Berthold Sichert GmbH, 12277 Berlin (DE); KRONE GmbH, 14167 Berlin (DE)
(72) Erfinder: Irmer, Günter, 13055 Berlin (DE)
(74) Vertreter: Alber, Norbert, Dipl.-Ing.

(56) Entgegenhaltungen:
- EP-A- 0 843 512
- DE-U- 29 519 260
- DE-U- 29 623 678
- FR-A- 2 776 850
- "KABELVERZWEIGERGEHÄUSE AUS KUNSTSTOFF" KABELVERZWEIGERGEHAEUSE AUS KUNSTSTOFF,XX,XX, XP002073400

## Beschreibung

### I. Anwendungsgebiet

Die Erfindung betrifft einen Verteilerschrank, der in der Regel im Freien aufgestellt ist und die Verteilanlagen für Schwachstromsysteme, beispielsweise Telefonanlagen, mit zugehörigen Stromversorgungseinrichtungen und Kabelab-/-anschlusseinrichtungen für ein bestimmtes räumliches Gebiet aufnimmt.

### II. Technischer Hintergrund

Derartige Verteilerschränke müssen - neben einer ausreichenden baulichen Stabilität sowie einer Widerstandsfähigkeit gegen Vandalismus etc. - heute weitere Forderungen erfüllen, beispielsweise dürfen keine zu starken elektromagnetischen Strahlungen an die Umgebung abgegeben werden, und für den Einsatz vor allem in wärmeren Ländern dürfen die Temperaturen im Inneren des Verteilerschrankes nicht zu hoch ansteigen trotz der dort untergebrachten, wärmeabgebenden elektrischen Baugruppen, aber auch nicht zu tief absinken.

Derartige Verteilerschränke werden grundsätzlich entweder aus Metall oder aus Kunststoff hergestellt, wobei Kunststoff den Vorteil einer billigeren Herstellbarkeit mit dem Vorteil eines elektrisch nicht leitenden Materiales verbindet, so daß selbst bei außerplanmäßigen Kontaktierungen des Gehäuses des Verteilerschrankes durch ein elektrisches Bauelement nie die Gefahr besteht, daß bei Berühren des Gehäuses von außen die betreffende Person einen Stromschlag erhält.

Was die ausreichende Kühlmöglichkeit derartiger Verteilerschränke angeht, ist es bereits bekannt, eine Kühlung durch Luftzirkulation zu bewirken. Zu diesem Zweck sind - bisher nur bei aus Stahlblech bestehenden Verteilerschränken - die Wände des Korpus doppelwandig ausgeführt, wobei im Zwischenraum zwischen den Wänden die Umgebungsluft zirkulieren, also unten eintreten und oben austreten, kann, wodurch einerseits ein Aufheizen des Inneren durch das Sonnenlicht und andererseits eine Wärmeabfuhr an der inneren Wand, die durch die elektrischen Baugruppen im Hauptraum aufgeheizt werden, bewirkt wird.

Eine solche doppelwandige Bauweise ist zwar theoretisch auch bei aus Kunststoff hergestellten Verteilerschränken möglich, wegen der dort notwendigen größeren Wandstärken und der durch Normungen in den verschiedenen Ländern vorgegebenen Außen- bzw. Innenabmessungen würde dies jedoch zu zu geringen inneren Freiräumen bzw. äußeren Gesamtabmessungen führen.

Bisher bestanden aus Kunststoff gefertigte Verteilerschränke in aller Regel aus einem Sockelkasten, der an der Oberseite meist offen war und ebenso an der Unterseite, da hier die im Erdboden verlegten Kabel in den Sockel eingeführt wurden, einem auf dem Sockel aufgesetzten Korpus, an dem eine oder zwei Türen bzw. Klappen zum Öffnen des Korpus vorhanden waren, um die elektrischen Einheiten im Inneren des Korpus zu montieren bzw. zu warten und zu prüfen, sowie einen den an der Oberseite offenen Korpus nach oben gegen Regen und andere Einflüsse schützenden, in der Regel dicht aufgesetzten, Deckel.

Zusätzlich konnte der Korpus eine Bodenplatte als integrales oder separates Bauteil aufweisen, welches - bis auf die Durchlässe für die Kabel - den Hauptraum im Inneren des Korpus gegenüber dem Sockelraum abtrennte.

Darüber hinaus kann ein Verteilerschrank aus diesen bekannten Bauteilen durch Hinzunahme weiterer Bauteile erweitert werden, die nicht unbedingt aus Kunststoff bestehen müssen, sondern auch aus anderen Materialien, beispielsweise Aluminium oder Stahlblech, insbesondere aus Edelstahl, sei es aus Gründen der Abschirmung gegen elektromagnetische Strahlung (EMV-Abschirmung), sei es aus Gründen der Wärmeleitfähigkeit.

Ein solches Zusatzteil kann ein oberes Zwischenteil sein, welches zwischen den oberen Rand des Korpus und den nach oben abschließenden Deckel, insbesondere dicht gegenüber dem Korpus abschließend, gesetzt wird. Dieses obere Zwischenteil dient manchmal der Beheizung, meist aber der Temperaturreduzierung im Inneren des Hauptraumes, also im Inneren des Korpus, in dem dieser Innenraum mittels des oberen Zwischenteiles gekühlt wird.

Aus der FR-A-2 220 899 ist ein Verteilerschrank mit einem oberen Zwischenteil bekannt, welches zwischen dem oberen Rand des Korpus und dem Deckel angeordnet ist, und das wenigstens einen Zwischenboden sowie einen seitlich umlaufenden Rand aufweist, und bei aufgesetztem Deckel sowie Korpus Öffnungen zum Ein- und Ausströmen der Umgebungsluft aufweist.

Aus der DE 296 23 678 U1 ist ein Verteilerschrank mit einem oberen Zwischenteil bekannt. Dabei wird zur Schaffung eines Aufnahmeraums oberhalb dieses Zwischenteils zusätzlich zum Zwischenteil ein separates Gehäuse-Aufsatzteil verwendet.

Die EP-A-843 512 offenbart ein Elektronikgehäuse, welches einen Korpus, einen Deckel und ein Zwischenteil aufweist. Das bekannte Zwischenteil weist einen Zwischenboden auf, der bei aufgesetzten Zwischenteil den Korpus nach oben hin abschließt. Auf dieses Zwischenteil wird dann der Deckel aufgesetzt. Die Raumhöhe des Raums zwischen dem Zwischenteil und dem Deckel entspricht der Höhe der Seitenwände des Deckels.

Zur Verbesserung der Wärmeableitung und/oder EMV-Abschirmung ist es in der Praxis üblich, entsprechende Klimatisierungs- bzw. Abschirmeinrichtungen oberhalb der elektrischen Baugruppen im Verteilerschrank unterzubringen. Zum Befestigen der Klimatisierungs- bzw. Abschirmeinrichtungen könnte z.B. das Zwischenteil als Befestigungsfläche dienen. Der Nachteil besteht jedoch darin, dass der Raum zwischen dem oberen Zwischenteil und dem Deckel nicht ausreicht, um entsprechende Einrichtungen aufnehmen zu können. Zudem wird durch die in der Praxis häufig verwendeten Einsätze mit vorgegebenen Steckplätzen zum Montieren der elektrischen Baugruppen im Inneren eines Verteilerschranks eine nachträgliche flexible Raumaufteilung und somit das Schaffen eines solchen Aufnahmeraums unterhalb des oberen Zwischenteils erschwert.

### III. Darstellung der Erfindung

### a) Technische Aufgabe

Es ist daher die Aufgabe der vorliegenden Erfindung, einen Verteilerschrank bzw. einen Bausatz zur Herstellung eines solchen Verteilerschranks zu schaffen, wobei der Verteilerschrank in einfacher Weise durch Klimatisierungseinrichtungen und/oder EMV-Abschirmeinrichtungen um- bzw. nachrüstbar ist.

### b) Lösung der Aufgabe

Erfindungsgemäß wird diese Aufgabe durch die Merkmale der unabhängigen Ansprüche 1, 4, 17 und 18 gelöst. Vorteilhafte Ausführungsformen ergeben sich aus den Unteransprüchen.

Durch das Vorsehen eines umlaufenden, nach oben aufragenden Randes am oberen Zwischenteil wird sowohl oberhalb als auch unterhalb des Zwischenbodens zusätzlicher Raum geschaffen, um nachträglich Klimatisierungseinrichtungen unterbringen zu können. Darüber hinaus ist ein Montagerahmen vorgesehen, der zur Aufnahme von elektrischen Baugruppen im Inneren des Korpus dient, derart, dass die elektronischen Baugruppen im Verteilerschrank jederzeit flexibel an einer anderen Position anbringbar sind, um zusätzlichen Raum unterhalb des Zwischenbodens zu schaffen.

An dem oberen Zwischenteil, welches neben einem außen umlaufenden Rand auch einen Zwischenboden aufweist, der vorzugsweise den Hauptraum des Korpus nach oben hin abdichtet, können an der Unterseite des Zwischenbodens, also auch u. U. auch etwas in den Hauptraum des Korpus hineinragend, ein oder mehrere untere Kühlkörper befestigt sein. Diese entziehen der Luft, die im Inneren des Hauptraumes zirkuliert, beim Entlangstreichen unter der Decke, also der Unterseite des Zwischenbodens, Wärme, indem dieser Kühlkörper - in der Regel ein Rippenkörper - seine Wärme durch Wärmeleitung an das ebenfalls gut wärmeleitende Material des Zwischenbodens abgibt, mit dem er fest verbunden, eventuell sogar einstückig ausgebildet, ist.

Das obere Zwischenteil selbst ist oberhalb seines Zwischenbodens zur Umgebung hin nicht abgedichtet, sondern weist Öffnungen auf, beispielsweise in den Seitenrändem angeordnete Schlitze, die dem Ein- und Austreten von Umgebungsluft dienen, welche beim Entlangstreichen über die Oberseite des Zwischenbodens Wärme abführt. Dies kann verstärkt werden, wenn an der Oberseite des Zwischenbodens wiederum ein oberer Kühlkörper, vorzugsweise an derselben Stelle wie der untere Kühlkörper, angeordnet ist. Oberer und unterer Kühlkörper können auch einstückig miteinander ausgebildet und dicht in einem entsprechenden Durchbruch des Zwischenbodens angeordnet sein.

Diese Wirkung ist um so stärker, je größer die Fläche des Kühlkörpers ist, weshalb dieser in der Regel mehr als die Hälfte, etwa zwei Drittel oder drei Viertel, der Fläche des Zwischenbodens bedecken wird.

Um das Entlangstreichen von Luft entlang der Kühlrippen auf der Oberseite des Zwischenbodens zu optimieren, ist es insbesondere vorteilhaft, diese Kühlrippen - in der Aufsicht auf die Oberseite des oberen Zwischenteiles betrachtet - insbesondere sternförmig radial, beispielsweise von der Mitte des Zwischenbodens aus abstrebend anzuordnen, und dabei den Bereich um den geometrischen Kreuzungspunkt dieser radial verlaufenden Kühlrippen freizulassen, um dort ein passives, also nicht angetriebenes, Radial-Lüfterrad drehbar um eine senkrechte Achse anzuordnen. Das Radial-Lüfterrad weist dabei insbesondere in der Aufsicht bogenförmig gekrümmte Schaufeln auf.

Durch eine solche Anordnung wird - vor allem wenn in den Seitenrändern des oberen Zwischenteiles auf Höhe der Kühlrippen bzw. des Lüfters umlaufend Lüftungsschlitze in ausreichender Anzahl und Größe vorhanden sind - durch in die Lüftungsschlitze von außen hineinblasenden Wind das Lüfterrad angetrieben, und drückt dadurch auf den gegenüberliegenden Seiten Luft radial zwischen den Kühlrippen nach außen, wodurch eine besonders große Anzahl von Kühlrippen ständig von Außenluft bestrichen wird.

Daneben ist optional eine Funktionsöffnung im Zwischenboden angeordnet, die entweder durch einen Funktionsdeckel fest verschlossen sein kann, oder deren Funktionsdeckel per Hand oder auch automatisch, nämlich bei Überschreiten einer bestimmten Schwellentemperatur im Inneren des Hauptraumes, geöffnet werden kann oder welche statt dessen bzw. darüber hinaus der Aufnahme weiterer Bauteile dienen kann.

Die Funktionsteile, die in die Funktionsöffnung eingesetzt werden - wobei es im wesentlichen unerheblich ist, ob sich die Funktionsteile dabei mehr oberhalb oder mehr unterhalb des Zwischenbodens in vertikaler Richtung erstrecken - können für die passive Kühlung des Hauptraumes bei geöffneter Funktionsöffnung ein eingesetzter Luftfilter mit einem EMV-Filter sein oder auch ein aktiver, elektrisch betriebener Lüfter, der dann durch die Funktionsöffnung hindurch warme Luft aus dem Inneren des Korpus absaugt oder auch der vorbeschriebene passive Lüfter, der dann in der Höhe vorzugsweise oberhalb des Zwischenbodens plaziert ist, in den Bereich oberhalb des Zwischenbodens des oberen Zwischenteiles und durch die dort vorhandenen Öffnungen in die Umgebung hinauspreßt.

Auch das Einsetzen eines Luft/Luft-Wärmetauschers ist möglich, der vorzugsweise jeweils offene Primär- und Sekundärkreise aufweist, und wobei durch den einen Kreis Luft des Hauptraumes, also aus dem Korpus, hindurchströmt, während durch den anderen Kreis Luft aus dem Bereich oberhalb des Zwischenbodens hindurchströmt, also von außen eingeströmte Umgebungsluft. Damit ist die Luft des Hauptraumes immer noch gegenüber der Umgebungsluft getrennt und von dieser abgedichtet, so daß das Eindringen von Verschmutzungen unterbunden wird.

Das Hindurchströmen der beiden Luftarten durch die jeweiligen offenen Kreise des Wärmetauschers kann auf einer oder auf beiden Seiten jeweils durch angetriebene, vorzugsweise elektrisch betriebene, Lüfter unterstützt werden. Es kann auch nur einer der beiden Kreisläufe vorhanden sein, während der andere Kreislauf fehlt, und nur über eine entsprechend große äußere Oberfläche des Wärmetauschers die andere Luftart darüberströmt und über Konvektion Wärme zuführt bzw. abführt.

Ein anderes Zusatzteil kann ein - vor allem speziell gestalteter - Montagerahmen im Inneren des Korpus sein. Der Montagerahmen ist vorzugsweise ein aus Aluminiumprofilen zusammengesetzter selbstragender Rahmen, der nahe der Innenseiten des Korpus verläuft, eine hohe Stabilität besitzt, und an dem die elektrischen Baugruppen befestigt und mit den Kabeln verbunden werden.

Zu diesem Zweck ist der Montage-Rahmen vorzugsweise quaderförmig gestaltet mit offenen Seitenflächen, wobei die Profile entlang aller Kanten des Quaders verlaufen. Vorzugsweise ist dabei die horizontal verlaufende Querstrebe an der oberen, hinteren Kante - betrachtet von den frontseitigen Türen des Korpus aus - nach unten versetzt, um dort notwendige Einbauten besser fixieren zu können.

In der Vorderfläche des Montage-Rahmens ist zusätzlich ein rechteckiger, vertikal stehender zweidimensionaler Rahmen als Baugruppenträger vorhanden, welcher in Horizontalrichtung verschiebbar an den oberen und unteren vorderen Querstreben des Montagerahmens angeordnet ist. Die elektrischen Baugruppen werden an diesem Baugruppenträger befestigt, und können so entsprechend der Position der von unten heranreichenden Kabel durch Verschieben des Baugruppenträgers positioniert werden. Es können auch mehr als ein solcher Baugruppenträger im Montagerahmen vorhanden sein.

Ansonsten sind alle Außenflächen des Montagerahmens offen, und nicht flächig geschlossen. Zusätzlich besitzt der Verteilerschrank eine EMV-Abschirmung, die auf unterschiedliche Art und Weise realisiert sein kann, jedoch immer aus einem Material bestehen muß, welches elektromagnetische Strahlung nicht hindurchtreten läßt.

Dieses Material kann in ausreichender Konzentration dem Kunststoff, aus welchem der Korpus und/oder die Türen und/oder der Deckel und/oder der Sockel usw. bestehen, beigemischt sein, oder die genannten Kunststoffteile können auf der Innenseite mit einer Beschichtung, die dieses Material enthält bzw. aus diesem Material besteht, versehen sein, oder der Hauptraum ist wenigstens auf seinen Umfangsseiten, vorzugsweise auch nach unten und nach oben, mit einem Gewebe dieses Materials ausgekleidet bzw. mit Blechen oder Lochblechen dieses Materiales.

Die Befestigung in den beiden letztgenannten Fällen kann entweder auf den Innenseiten des Korpus bzw. der Türen oder auf den Außenseiten des Montagerahmens vorgesehen werden.

Dabei ist es besonders vorteilhaft, den Montagerahmen nicht am Korpus, sondern ausschließlich am Sockel bzw. einem auf dem Sockel aufgesetzten unteren Zwischenteil zu befestigen und zusätzlich keine - in Querrichtung betrachteten - Hinterschneidungen zwischen Montagerahmen und Korpus zuzulassen.

Denn dadurch soll eine Umrüstung bestehender Verteilerschränke ohne Betriebsunterbrechung dadurch ermöglicht werden, daß die innerhalb des Montageraumes fixierten und angeschlossenen elektrischen Bauelemente dort verbleiben und auch nicht abgeklemmt werden müssen, und dennoch Deckel und Korpus nach oben abgehoben werden können.

Dies ist häufig notwendig, um entweder den beschädigten Korpus auszutauschen, oder um den Korpus gegen eine andere Art von Korpus, beispielsweise einen EMV-dichten Korpus, auszutauschen, oder um zwischen der Außenseite des Montagerahmens und der Innenseite des Korpus eine EMV-Abschirmung montieren und danach den alten Korpus wieder aufsetzen zu können.

Ein weiteres Zusatzteil ist das untere Zusatzteil, welches zwischen dem oben offenen Sockelkasten und dem unteren Rand des Korpus bzw. des Montagerahmens positioniert ist.

Dieses untere Zwischenteil ist ebenfalls wieder wannenförmig ausgebildet, mit einem Zwischenboden und einem umlaufenden Rand, und es sind ebenfalls wieder Öffnungen vorhanden, um Luft der Umgebung in den Bereich unterhalb des Zwischenbodens eindringen zu lassen.

Vorzugsweise wird hier eine Gestaltung gewählt, wonach im oberen Bereich des Sockelkastens deren äußere Wand nach innen zurückversetzt ist, und damit ein horizontaler Abstand zwischen dieser Wand des Sockelkastens und dem äußeren Rand des unteren Zwischenteiles verbleibt, welcher als Öffnung dient, so daß diese Öffnung von der Seite bzw. seitlich oben nicht sichtbar ist. Das gleiche Prinzip kann auch beim oberen Zwischenteil angewandt werden.

Der Zwischenboden des Zwischenteiles ist nicht vollständig geschlossen, sondern weist über seine Fläche verteilt mehrere Kabeldurchgangsöffnungen auf, die wahlweise durch Deckel verschließbar sind, welche einerseits gegen Verschmutzung, aber auch gegen elektromagnetische Abstrahlung abdichtend wirken. Aus diesem Grund ist vorzugsweise auch das untere Zwischenteil sowie die die Kabeldurchgangsöffnung verschließenden Deckel wiederum aus einem EMV-abschirmenden Material, beispielsweise Aluminium, hergestellt.

Zusätzlich kann der Zwischenboden dieses unteren Zwischenteils auch eine oder mehrere Funktionsöffnungen aufweisen, die sinngemäß den gleichen Zwecken und damit dem Einbau der gleichen Funktionsteile dienen kann, wie anhand des oberen Zwischenteiles beschrieben.

Der Zwischenboden kann sich aus diesem Grund entweder im oberen Höhenbereich der vertikalen Erstreckung dieses unteren Zwischenteiles befinden, wenn diese Funktionsteile unterhalb des Zwischenbodens positioniert werden, oder gerade andersherum - und dies in bevorzugter Ausführungsform - im unteren Bereich der vertikalen Erstreckung, um über dem Zwischenboden Platz zur Anordnung solcher Funktionsteile wie einem Lüfter zu gewinnen, der ja zwecks Energieversorgung mit den elektrischen Baugruppen des Hauptraumes verbunden werden muß und zusätzlich Platz benötigt.

Durch Hinzufügen eines oder mehrerer der genannten Zusatzteile bzw. Zusatzmassnahmen zu den schon bisher bekannten Bauteilen kann aus diesem Bausatz je nach Einsatzzweck der individuell passende Verteilerschrank erstellt werden.

### c) Ausführungsbeispiele

Eine Ausführungsform gemäß der Erfindung ist im folgenden anhand der Figuren beispielhaft näher beschrieben. Es zeigen:
- Fig. 1:: eine Explosionsdarstellung des erfindungsgemäßen Verteilerschrankes,
- Fig. 2:: eine vertikale Schnittdarstellung durch den oberen Teil eines Verteilerschrankes,
- Fig. 3:: eine vertikale Schnittdarstellung durch die Funktionsöffnung des oberen Zwischenteiles und ein dort eingesetztes Funktionsteil
- Fig. 4:: ein an dieser Stelle eingesetztes anderes Funktionsteil,
- Fig. 5:: ein Vertikalschnitt durch den fertigen Verteilerschrank,
- Fig. 6:: Detaildarstellungen des oberen Zwischenteiles,
- Fig. 7:: das untere Zwischenteil, und
- Fig. 8:: eine Aufsicht auf ein anderes oberes Zwischenteil.

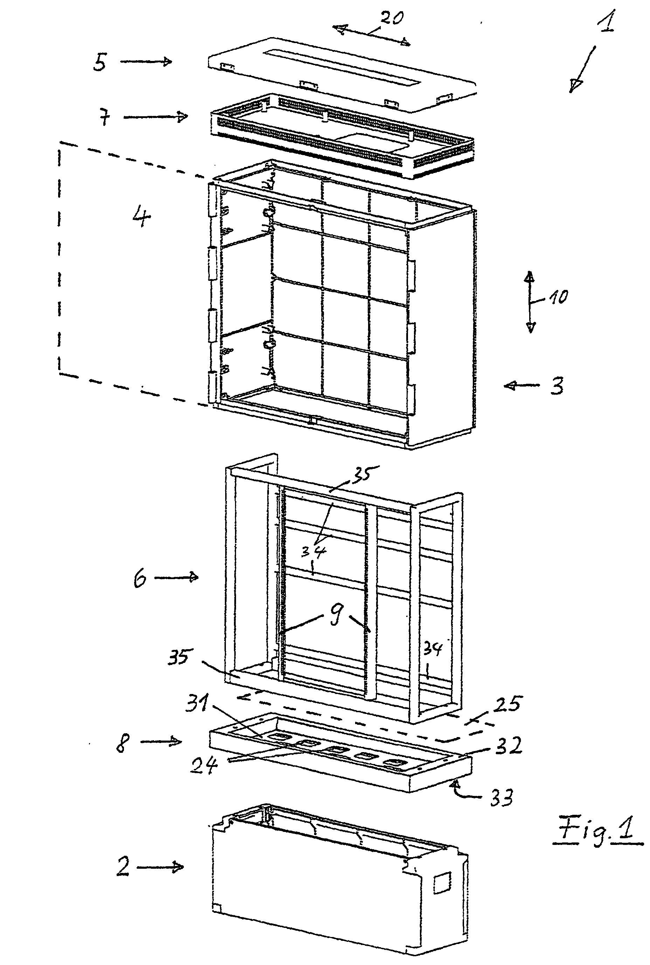

Figur 1 zeigt in Explosionsdarstellung, also in vertikaler Längsrichtung 10 des Verteilerschrankes auseinandergezogen, die einzelnen Bauteile, aus denen der Verteilerschrank - im unbestückten Zustand - besteht:

Der Sockelkasten 2 ist ein oben und unten offener Kasten mit Wänden entlang des gesamten Umfanges, der im montierten Zustand teilweise aus dem Erdboden herausragt, und durch welchen die in der Erde verlegten elektrischen Leitungen in den Verteilerschrank von unten hereingeführt werden. Seine Vorderseite lässt sich öffnen.

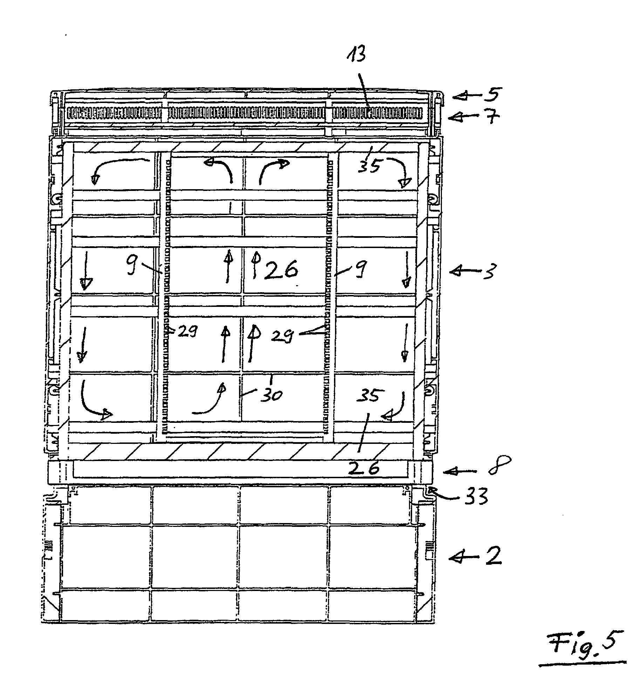

Dabei sind die im oberen Endbereich nach innen zurückversetzten Außenflächen der Seitenwände zu erkennen, wie insbesondere auch in Figur 5.

Durch Aufsetzen des aus Metallblech, insbesondere Aluminium, bestehenden unteren Zwischenteiles 8 auf den Sockelkasten 2 dessen Außenumfang gleich oder geringfügig größer wie der Sockelkasten 2 ist, entstehen zwischen den Unterkanten des außen umlaufenden Randes 32 des wannenförmigen unteren Zwischenteiles 8 und dem oberen Endbereich des Sockelkastens 2 nach unten weisende Eintrittsöffnungen 33, sofern dieses untere Zwischenteil 8 nicht über den gesamten Umfang, sondern nur abschnittsweise, beispielsweise nur in den Eckbereichen, auf dem oberen Rand des Sockelkastens 2 aufliegt.

Diese Eintrittsöffnungen für die Umgebungsluft in den Hauptraum 26 sind insbesondere notwendig, wenn an anderer Stelle Luft aus dem Hauptraum 26 abgesaugt wird, z.B. im oberen Bereich über ein obere Zwischenteil.

Zu diesem Zweck kann z. B. der Rand 32 des Zwischenteiles 8 im Querschnitt betrachtet etwa U-förmig mit nach unten weisender offener Seite gestaltet sein, dessen innerer vertikaler oder schräg vertikal verlaufender Schenkel dann auf zwei oder vier Seiten in den horizontalen Zwischenboden 31 übergeht.

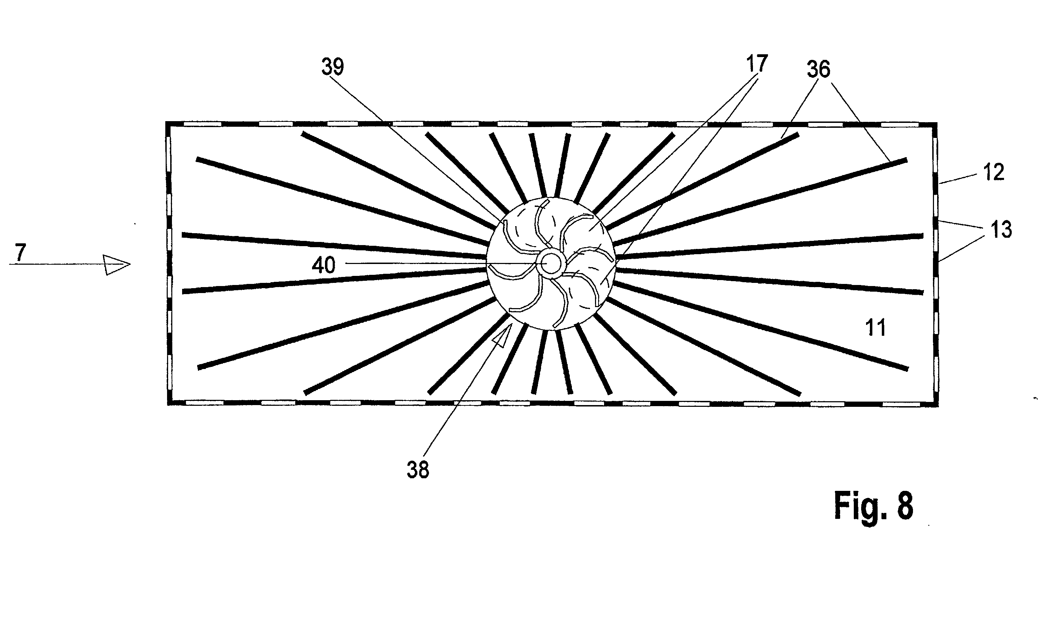

Im tiefliegenden Zwischenboden 31 des wannenförmigen Zwischenteiles 8 sind die in Querrichtung aufgereihten - siehe insbesondere Figur 7 - Kabeldurchgangsöffnungen 24 zu erkennen, die durch - nicht dargestellte - Verschlußdeckel EMVsicher und auch staubdicht verschließbar sind. In einer zweiten, parallelen Reihe sind drei Funktionsöffnungen 17 im Zwischenboden 31 angeordnet

Auf dem unteren Zwischenteil 8 sitzt der Korpus 3, der an der Vorderseite durch eine oder zwei in Figur 1 nur angedeutete Türen 4 zu öffnen und zu schließen ist.

Der darunter dargestellte Montagerahmen 6 befindet sich im zusammengesetzten Zustand des Verteilerschrankes, wie im Schnitt in Figur 5 dargestellt, vollständig innerhalb des Korpus 3, und ist über das untere Zwischenteil 8 mit dem Sockelkasten 2 und mit dem Korpus 3 fest verbunden, vorzugsweise verschraubt, so wie dies im übrigen die bevorzugte Verbindungsart zwischen allen Bauteilen des Verteilerkastens ist.

Der Korpus 3 weist an den Seiten sowie an der Rückwand geschlossene plattenartige Wände auf, die auf der Innenseite durch Rippen 30 etc. versteift sind, wobei der Korpus 3 einstückig oder aus unterschiedlichen Teilen zusammengesetzt sein kann.

Die wenigstens eine Tür 4, die ebenso wie der Korpus 3 aus Kunststoff, nämlich als Spritzteil, insbesondere nach dem Thermoplast-Schaumspritzgiessverfahren hergestellt ist, ist über Scharniere am Korpus 3 angelenkt, und weist ein Schloß auf, um ein Öffnen durch nicht Berechtigte zu verhindern.

Der Korpus 3 ist an der Oberseite offen, und ebenso an der Unterseite, kann jedoch an der Unterseite durch eine Bodenplatte 25, die Aussparungen für einzelne hindurchzuführende Kabel aufweisen kann, wie in Figur 1 angedeutet weitestgehend verschlossen werden.

Die Bodenplatte 25 wird eingesetzt entweder anstelle des unteren Zwischenteiles 8, um vor allem eine Abdichtung gegenüber eindringendem Staub zu verhindern und auch um eine EMV-Abschirmung zu bieten, oder auch zusätzlich zum unteren Zwischenteil 8, wenn beispielsweise das untere Zwischenteil 8 aus Kunststoff besteht und keine EMV-Abschirmung darstellt.

In diesem Fall ist die Bodenplatte des Korpus 3 als EMV-Abschirmung ausgebildet.

Der Montagerahmen 6 befindet sich im Inneren des Korpus 3 und ist so dimensioniert, daß er dessen Innenraum weitestgehend ausfüllt. Der Montagerahmen 6 besteht aus einem Gitterwerk von Streben, die vorzugsweise entlang der Kanten der quaderförmigen Gesamtkontur des Montagerahmens 6 verlaufen.

Lediglich die in horizontaler Querrichtung 20 verlaufende hintere obere Querstrebe 34 ist nach unten versetzt und stellt eine von vier übereinanderliegenden Querstreben 34 an der Rückseite des Montagerahmens dar, die dem Anbringen von Stromversorgungseinrichtungen, Kabelabschlusseinrichtungen etc. dienen.

Die offenen Seitenflächen des Montagerahmens sind - außer entlang den Kanten - weder horizontal noch quer zusätzlich verstrebt. Gleiches gilt auch für die Vorderfront des Montagerahmens. Dort ist zusätzlich ein Baugruppenträger 9 in Form eines rechteckigen, zweidimensionalen, vertikalen Rahmens verschiebbar an den oberen und unteren Querstreben der Vorderseite des Montagerahmens 6 verschiebbar gelagert, um die Position z.B. entsprechend der Lage der benötigten Kabel verändern zu können.

An diesem Baugruppenträger 9 werden später - bei fertig erstelltem Verteilerschrank 1 und geöffneter Türe 4 - vom Monteur die elektrischen Baugruppen befestigt, indem die Vertikalstreben des Baugruppenträgers 9 einen genormten Abstand aufweisen und genormte Befestigungspunkte bzw. Lochreihen 29 zum Verschrauben der elektrischen Baugruppen aufweisen.

Weiterhin können im Inneren des Montagerahmens 6, also im Hauptraum des Verteilerschrankes 1, zusätzliche elektrische Einheiten wie beispielsweise eine Steuerung abhängig von der Innenraumtemperatur im Hauptraum für die Kühlung - sei es aktiv oder passiv, wie im folgenden noch beschrieben werden wird - angeordnet sein.

Auf der offenen Oberseite des Korpus 3 sitzt das obere Zwischenteil 7, welches - wie das untere Zwischenteil 8 - nur wenige Zentimeter hoch ist, so daß unteres und oberes Zwischenteil 7 und 8 zusammen die Gesamthöhe des Verteilerschrankes 1 gegenüber dem Zustand ohne diese Zwischenteile nur um insgesamt maximal 15 cm vergrößern.

Das obere Zwischenteil 7 sitzt dicht auf dem Korpus 3 auf, und wird selbst wiederum durch den auf das obere Zwischenteil 7 aufgesetzten Deckel des Verteilerschrankes 1 nach oben hin abgedeckt.

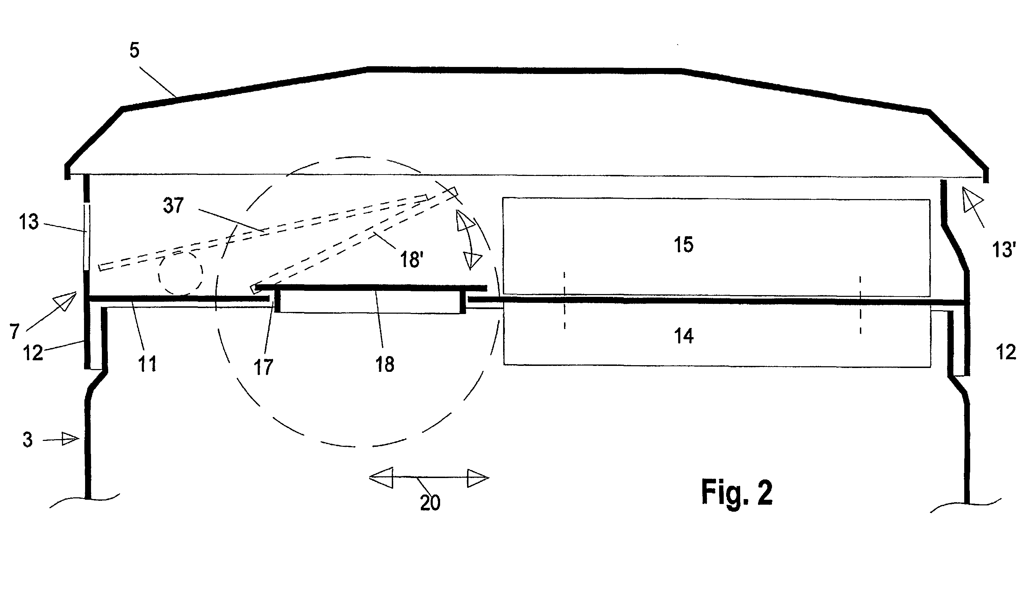

Der prinzipielle Aufbau des oberen Zwischenteiles 7 ist besser in der Figur 2 zu erkennen, welche in vertikaler Schnittdarstellung den oberen Bereich des Verteilerschrankes 1 zeigt.

Dabei ist zu erkennen, daß das obere Zwischenteil 7, welches wegen der Wärmeleitfähigkeit und der EMV-Abschirmung vorzugsweise aus Aluminium besteht, einen Zwischenboden 11 aufweist, der von einem umlaufenden Rand 12 umschlossen ist, wobei sich der Zwischenboden 11 dabei vorzugsweise eher im unteren Bereich der Höhe des im wesentlichen vertikal stehenden Randes 12 befindet. Auf der oberen Stirnfläche dieses oberen Zwischenteiles 7 ist der Deckel 5 aufgesetzt.

In Fig. 2 in der rechten Bildhälfte ist von dem Zwischenboden 11 sowohl nach oben abragend als auch nach unten abragend ein unterer bzw. oberer Kühlkörper 14 bzw. 15 zu erkennen, dessen Kühlrippen vorzugsweise jedoch quer zur Blickrichtung, also in Querrichtung 20 des Verteilerschrankes 1, verlaufen.

Dem liegt der Gedanke zugrunde, daß im Inneren des Hauptraumes 26, also des Korpus 3, eine ständige Luftzirkulation stattfindet, angetrieben durch die wärmeabgebenden dort montierten elektrischen Baugruppen, die vor allem im Baugruppenträger montiert sind.

An der Stelle, an welcher sich diese elektrischen Baugruppen befinden, wird die Luft erwärmt und steigt auf (siehe Figur 5), während sie in den davon entfernten Bereichen, vor allem den Randbereichen, des Hauptraumes entlang der Innenflächen der Wände des Korpus absinkt.

Unter dem oberen Ende des Hauptraumes, also unter dem auf dem Korpus 3 dicht aufsitzenden Zwischenboden 11 des oberen Zwischenteiles 7, strömt die Luft also im wesentlichen horizontal entlang, und dabei entlang der Kühlrippen 36 des unteren Kühlkörpers 14, der somit der Luft aus dem Hauptraum Wärme entzieht.

Zu diesem Zweck bestehen die Kühlkörper 14, 15 aus gut wärmeleitfähigem Material, insbesondere ebenfalls Aluminium. Durch flächige Anlage und Verbindung mit der Unterseite des Zwischenbodens 11 gibt der untere Kühlkörper 14 seine Wärme an den Zwischenboden 11 ab. Dadurch, daß an der gleichen Stelle darüber wiederum ein oberer Kühlkörper 15 montiert ist, gibt dieser obere Kühlkörper über seine große Oberfläche, insbesondere seine ebenfalls vorhandenen Kühlrippen 36 Wärme an diejenige Luft ab, die aus der Umgebung über die Schlitze 13 in das Innere des oberen Zwischenteiles 7 oberhalb des Zwischenbodens 11 ein- und an anderer Stelle dort über die analogen Schlitze 13 wieder austritt.

Dadurch wird eine Wärmeabfuhr ausschließlich über Wärmeleitung vom Hauptraum 26 in den Bereich oberhalb des Zwischenbodens 11 erzielt, ohne daß eine offene Verbindung zwischen beiden existieren muss, die das Eindringen von Wasser oder Verschmutzungen in den Hauptraum ermöglicht.

Für den Luftein- und Luftaustritt können die Schlitze 13 entweder - wie in der linken Bildhälfte der Figur 2 dargestellt, im vertikal stehenden Rand 12 ausgebildet sein oder - wie in der rechten Hälfte der Figur 2 zu sehen, von oben und zur Seite hin abgedeckt dadurch entstehen, daß der Rand 12 des Zwischenteiles 7 wenigstens abschnittweise radial nach innen zurückversetzt ist, und somit der äußere Rand des darübersitzenden Deckels 5 weiter außen steht, und der Deckel 5 auch nicht über den gesamten Umfang, sondern ebenfalls nur abschnittsweise, und gerade nicht in den Bereichen des zurückversetzten Randes 12, auf dem Zwischenteil 7 aufsitzt und dort befestigt, insbesondere verschraubt ist.

Weiterhin ist in Fig. 2 eine Funktionsöffnung 17 im Bereich neben den Kühlkörpern 14 bzw. 15 im Zwischenboden 11 dargestellt, die in Figur 2 durch einen Funktionsdeckel 18 verschlossen ist, der sowohl Dichtigkeit gegen eindringendes Wasser und Verschmutzung bietet als auch die gleiche EMV-Abschirmung wie der Zwischenboden 11 selbst.

Dies ist vorgesehen, wenn für den jeweiligen Einsatzzweck bzw. Einsatzort des Verteilerschrankes die Wärmeabfuhr aus dem Hauptraum mittels der vorbeschriebenen Kühler 14 und/oder 15 ausreichend ist.

Sofern zusätzliche Maßnahmen, beispielsweise aktive Entlüftung des Hauptraumes 26 oder aktive Kühlung der Luft des Hauptraumes, notwendig ist, wird der Funktionsdeckel 18 entnommen und damit die Funktionsöffnung 17 offengelegt, um hier verschiedene Funktionsteile unterbringen zu können:

In Figur 2 ist mit gestrichelten Linien ein öffenbarer und schließbarer Funktionsdeckel 18' dargestellt, der beispielsweise an einer Seite der Funktionsöffnung 17 mittels eines Scharniers gehalten ist und mittels eines elektrisch betriebenen Antriebes 37, beispielsweise über Ritzel und Zahnstange, automatisch und sensorgesteuert geöffnet werden kann. Dadurch kann die erwärmte, sich unter dem Zwischenboden 11 ansammelnde, Luft aus dem Hauptraum nach oben aus diesem entweichen, wozu ein Nachströmen von kühler Luft, vorzugsweise über den Sockelkasten 2 und/oder die Eintrittsöffnungen 33 zwischen Sockelkasten 2 und unterem Zwischenteil 8 in den Funktionsraum 26 notwendig ist.

Um durch die geöffnete Funktionsöffnung 17 ein Austreten von elektromagnetischer Strahlung und/oder ein Eindringen von Feuchtigkeit oder anderen Verschmutzungen zu unterbinden, ist die Funktionsöffnung 17 mittels eines Staub- und Feuchtigkeitsfilters 22 und eines EMV-Filters 23, die jedoch beide luftdurchlässig sind, verschlossen.

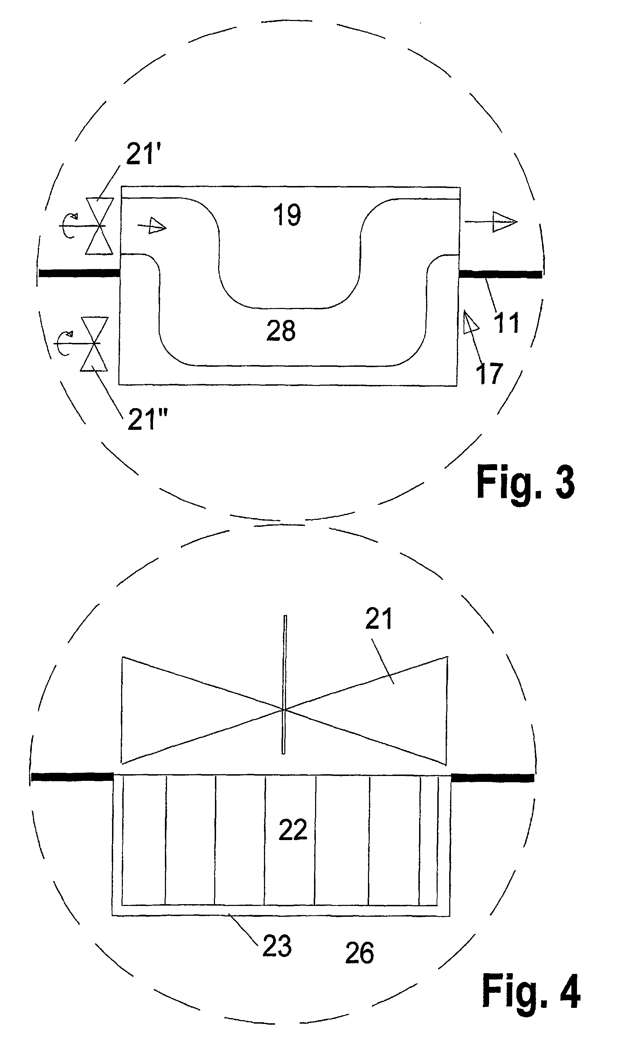

Ein solcher kombinierter Luft/EMV-Filter 22/23 ist in der vergrößerten Detaildarstellung für die Funktionsöffnung 17 in Fig. 4 eingezeichnet, wobei dort zusätzlich ein elektrisch angetriebener Lüfter 21, also ein Lüfterrad, die Luft aus dem Hauptraum 26 nach oben absaugt.

Fig. 3 zeigt eine weitere Möglichkeit, nämlich einen Wärmetauscher 19, der in der Funktionsöffnung 17 sitzt, und somit einerseits mit dem Hauptraum 26 als auch mit dem Raum oberhalb des Zwischenbodens 11 in Verbindung steht. Auch hier ist der Wärmetauscher 19 dicht in der Funktionsöffnung 17 angeordnet, so daß hier kein Luftaustausch zwischen Hauptraum 26 und dem Raum oberhalb des Zwischenbodens 11 möglich ist.

Der Wärmetauscher der Fig. 3 besitzt nur einen offenen Kreislauf, nämlich für die Luft oberhalb des Zwischenbodens 11, der durch Leitungen 28, vorzugsweise mit Hilfe eines Lüfters 21', von einer Seite zur anderen hindurchgedrückt wird. Die Leitungen 28, durch welche diese Luft hindurchbewegt wird, sind dabei insbesondere gekröpft und reichen bis in den Bereich unterhalb des Zwischenbodens 11 und damit bis in den Hauptraum 26 hinab. Sie können dort direkt von der Luft des Hauptraumes 26 bestrichen werden, entweder aktiv angetrieben über einen dort positionierten weiteren Lüfter 21", oder die Luftführung im Hauptraum 26 geschieht - mit oder ohne diesen Lüfter 21" im Hauptraum - wiederum durch - nicht dargestellte - Rohrleitungen, die mit den Rohrleitungen 28 des ersten Kreises wärmeleitend verbunden sind.

Anstelle des beschriebenen Luft/Luftwärmetauschers ist auch der Einsatz eines Luft/Wasser-Wärmetauschers möglich, bei dem anstelle der Luft oberhalb des Zwischenbodens 11 Wasser oder ein anderes flüssiges Kältemittel eingesetzt wird, welches dann allerdings im Kreis umgepumpt werden muß und wiederum durch die entlangströmende Umgebungsluft, die in dem Bereich oberhalb des Zwischenbodens 11 in das obere Zwischenteil 7 eintritt, gekühlt wird.

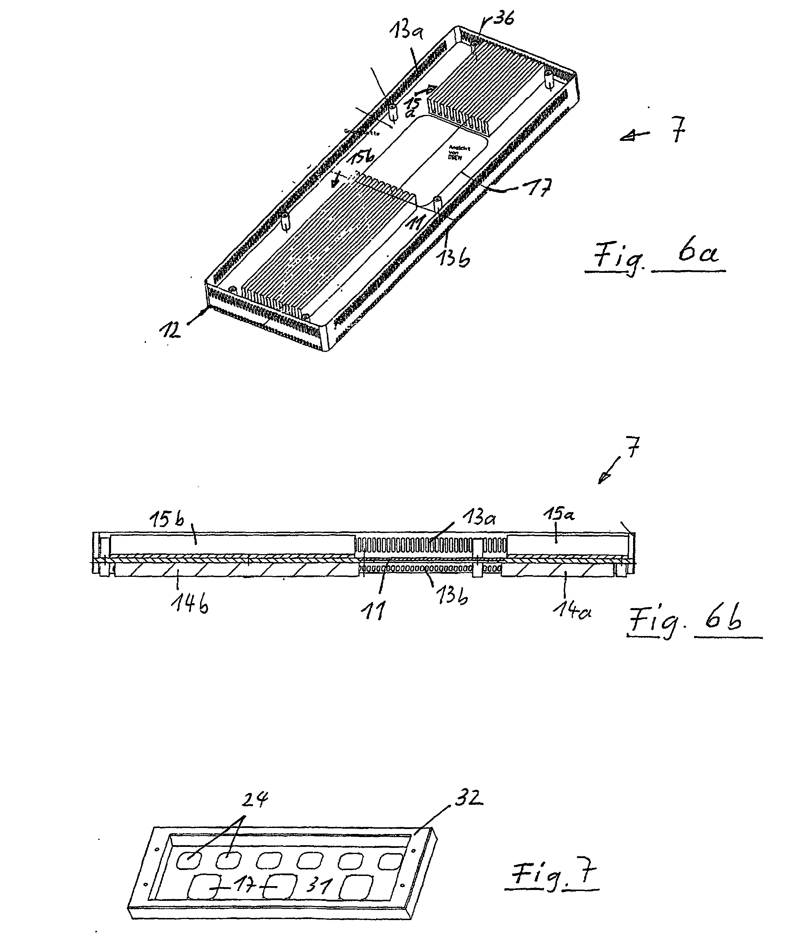

Die Figuren 6a und b zeigen in perspektivischer Darstellung und im Querschnitt eine weitere Variante eines oberen Zwischenteiles 7. Dieses unterscheidet sich durch eine etwa mittige Funktionsöffnung 17 und diesbezüglich auf beiden Seiten angeordnete Kühlkörper, also je zwei obere und je zwei untere Kühlkörper 14 bzw. 15. Femer sind entlang des Randes umlaufend nicht nur eine Reihe Schlitze 13 im Rand 12 vorhanden, sondern zwei Reihen 13a, b übereinander, von denen eine oberhalb und eine unterhalb des Zwischenbodens 11 liegt.

Dadurch ergeben sich zwei verschiedene Einsatzmöglichkeiten:

Je nach dem, ob der obere Rand der Wand des Korpus 3 innerhalb des Randes 12 des oberen Zwischenteiles 7 dicht an der Unterseite deren Zwischenboden 11 anliegend montiert wird oder nicht, belüften die Schlitze 13b dieser unteren Reihe den Hauptraum 26 direkt nach außen oder nicht.

Fig. 8 zeigt eine Aufsicht auf ein oberes Zwischenteil 7 mit rechteckigem Grundriß, der von einem umlaufenden, nach oben aufragenden Seitenrand 12 umgeben ist, in dem sich - vorzugsweise vertikal stehende - Schlitze 13 befinden, die die Umgebungsluft eintreten lassen sollen, und einen möglichst hohen Flächenanteil - vorzugsweise mehr als 50% - bezogen auf die Gesamtfläche des Seitenrandes 12 aufweisen.

An einer Stelle - vorzugsweise im Zentrum - ist auf dem Zwischenboden 11, der die Zeichenebene der Fig. 8 bildet, ein Radial-Lüfterrad 38 drehbar um eine vertikal zum Zwischenboden 11 stehende Achse 40 angeordnet. Die Schaufeln 39 des Lüfterrades 38 sind dabei bogenförmig gekrümmt, um bei seitlicher Anströmung immer eine bevorzugte Drehrichtung zu bewirken, und auf der von der Anströmrichtung gegenüberliegenden Richtung die Luft radial nach außen zu drücken.

Radial um den Bereich des Lüfterrades herum und vorzugsweise möglichst nah an das Lüfterrad 38 heranreichend sind vom Zwischenboden 11 aufragende, radial sternförmig nach außen verlaufende Kühlrippen 36 angeordnet, die somit einerseits von der das Lüfterrad anströmenden Außenluft und andererseits auf der gegenüberliegenden Seite von der durch das Lüfterrad 38 radial nach außen gedrückten Luft gestrichen werden, wodurch die Kühlung der Kühlrippen 36 gefördert wird.

Eine gleiche oder analoge Ausbildung - also radiale Anordnung der Kühlrippen und drehbar gelagertes Lüfterrad - kann sich auf der in Fig. 8 nicht sichtbaren Unterseite des Zwischenbodens 11 befinden, wobei in beiden Fällen bevorzugt die Lüfterräder nicht angetrieben, also passiv sind, und nur durch die anströmende Luft - unterhalb des Zwischenbodens dann durch dort auftretende Zirkulation im Inneren des Korpus - angetrieben werden.

Dabei können zusätzlich das oberhalb und das unterhalb des Zwischenbodens 11 liegende Lüfterrad über eine gemeinsame Welle drehfest miteinander verbunden werden, wodurch das oberhalb des Zwischenbodens liegende, von der Außenluft angetriebene Lüfterrad 38 trotz dichtem Zwischenboden 11 die Zirkulation im Bereich unterhalb des Zwischenbodens 11, also im dichten Teil des Korpus, fördert.

Ebenso können - vorzugsweise im Bereich des Lüfterrades 38 - eine oder mehrere Funktionsöffnungen 17, beispielsweise als sternförmig um die Achse des Lüfterrades herum angeordnete kreisförmige Öffnungen, angeordnet sein, um eine Durchtrittsöffnung für Luft von dem Bereich unterhalb des Zwischenbodens 11 in den Bereich darüber zu schaffen. In diesem Fall ist das Lüfterrad als kombiniertes Axial-Radial-Lüfterrad ausgebildet, um die unterhalb des Zwischenpults 11 befindliche warme Luft in Achsrichtung des Lüfterrades hochzusaugen.

Die Funktionsöffnungen 17 können dabei wie vorbeschrieben durch EMV-Filter, Staubfilter etc. abgedichtet sein und auch durch öffenbare Deckel, in diesem Fall auf der Unterseite der Funktionsöffnungen 17, verschließbar sein, falls sich nur ein Lüfterad auf der Oberseite des Zwischenbodens 11 befindet

### BEZUGSZEICHENLISTE

- 1: Verteilerschrank
- 2: Sockelkasten
- 3: Korpus
- 4: Tür
- 5: Deckel
- 6: Montagerahmen
- 7: oberes Zwischenteil
- 8: unteres Zwischenteil
- 9: Baugruppenträger
- 10: vertikale Längsrichtung
- 11: Zwischenboden
- 12: Rand
- 13: Schlitze
- 14: unterer Kühlkörper
- 15: oberer Kühlkörper
- 16: Kühlrippen
- 17: Funktionsöffnung
- 18: Funktionsdeckel
- 19: Wärmetauscher
- 20: Querrichtung
- 21: Lüfter
- 22: Luftfilter
- 23: EMV-Filter
- 24: Kabeldurchgangsöffnung
- 25: Bodenplatte
- 26: Hauptraum
- 27: Funktionsöffnung
- 28: Leitungen
- 29: Lochreihe
- 30: Rippe
- 31: Zwischenboden
- 32: Rand
- 33: Eintrittsöffnungen
- 34: Querstreben
- 35: Querstreben
- 36: Kühlrippen
- 37: Antrieb
- 38: Löffelrad
- 39: Schaufel
- 40: Achse

## Patentansprüche

1. Verteilerschrank (1) für die Aufnahme von Schwachstrom-Verteilanlagen, insbesondere zur Anordnung im Freien, mit
- einem Sockelkasten (2),
- einem Schrankkorpus (3) mit wenigstens einer Tür (4),
- einem Schrankdeckel (5),
- einem oberen Zwischenteil (7), welches zwischen dem oberen Rand (3) des Korpus (3) und dem Deckel (5) angeordnet ist, und das wenigstens einen Zwischenboden (11) sowie einen seitlich umlaufenden Rand (12) aufweist, und bei angesetztem Deckel (5) sowie Korpus (3) Öffnungen zum Ein- und Ausströmen der Umgebungsluft aufweist,
- wobei wenigstens der Korpus und/oder der Sockelkasten (2) und/oder der Deckel (5) und/oder die wenigstens eine Tür (4) aus Kunststoff bestehen,
**dadurch gekennzeichnet, daß**
- ein Montagerahmen (6) vorgesehen ist, der zur Aufnahme elektrischer Baugruppen im Inneren des Korpus dient, und
- das Zwischenteil (7) einen umlaufenden, nach oben aufragenden Rand (12) aufweist.

2. Verteilerschrank nach Anspruch 1,
**dadurch gekennzeichnet, daß**
wenigstens der Korpus und/oder der Sockelkasten (2) und/oder der Deckel (5) und/oder die wenigstens eine Tür (4) als Kunststoffspritzteil hergestellt sind.

3. Verteilerschrank nach Anspruch 1 oder 2,
**dadurch gekennzeichnet, daß**
der Montagerahmen (6) in Querrichtung betrachtet keine Hinterschneidungen mit dem Korpus (3) aufweist, so daß ein Abheben des Korpus (3) nach oben möglich ist trotz Verbleibens des Montagerahmens (6) mit allen daran befestigten Bauteilen auf dem Sockelkasten (2), und insbesondere entlang des Montagerahmens (6) horizontal verschiebbar ein rahmenförmiger Baugruppenträger (9) zum Befestigen der elektrischen Baugruppen angeordnet ist.

4. Bausatz zum Erstellen eines Verteilerschrankes, welcher der Aufnahme von Schwachstrom-Verteilanlagen dient und insbesondere im Freien aufgestellt werden soll, mit
- einem Sockelkasten (2),
- einem Schrankkorpus (3) mit wenigstens einer Tür (4),
- einem Schrankdeckel (5),
- einem oberen Zwischenteil (7), das zwischen dem oberen Rand (3) des Korpus (3) und dem Deckel (5) anordenbar ist, und das wenigstens einen Zwischenboden (11) sowie einen seitlich umlaufenden Rand (12) aufweist, und bei angesetztem Deckel (5) sowie Korpus (3) Öffnungen zum Ein- und Ausströmen der Umgebungsluft aufweist,
- wobei wenigstens der Korpus und/oder der Sockelkasten (2) und/oder der Deckel (5) und/oder die wenigstens eine Tür (4) aus Kunststoff bestehen und der Schrankdeckel (5) jeweils aus Kunststoff besteht,
**dadurch gekennzeichnet, daß**
- ein Montagerahmen (6) vorgesehen ist, der zur Aufnahme von elektrischen Baugruppen dient,
- das Zwischenteil (7) einen umlaufenden, nach oben aufragenden Rand (12) aufweist.

5. Bausatz nach Anspruch 4,
**dadurch gekennzeichnet, daß**
wenigstens der Korpus und/oder der Sockelkasten (2) und/oder der Deckel (5) und/oder die wenigstens eine Tür (4) als Kunststoffspritzteil hergestellt sind.

6. Bausatz nach Anspruch 4,
**dadurch gekennzeichnet, daß**
der Schrankdeckel (5) jeweils aus Polycarbonat besteht.

7. Bausatz nach einem der Ansprüche 4 bis 6,
**dadurch gekennzeichnet, daß**
der Montagerahmen (6) in Querrichtung betrachtet keine Hinterschneidungen mit dem Korpus (3) aufweist, so daß ein Abheben des Korpus (3) nach oben möglich ist trotz Verbleibens des Montagerahmens (6) mit allen daran befestigten Bauteilen auf dem Sockelkasten (2).

8. Verteilerschrank bzw. Bausatz nach einem der vorhergehenden Ansprüche,
**dadurch gekennzeichnet, daß**
der seitlich umlaufende Rand (12) vertikal stehend ausgebildet ist, und die Öffnungen zum Ein- und Ausströmen der Umgebungsluft als Schlitze (13) ausgebildet sind, wobei die Schlitze (13) im Rand (12) oberhalb des Zwischenbodens (11) vorgesehen sind.

9. Verteilerschrank bzw. Bausatz nach einem der vorhergehenden Ansprüche,
**dadurch gekennzeichnet, daß**
der Verteilerschank (1) ein unteres Zwischenteil (8) aufweist, welches zwischen dem unteren Rand des Montagerahmens (6) und dem oberen Rand des Sockelkastens (2) angeordnet ist, und insbesondere das obere Zwischenteil (7) und/oder das untere Zwischenteil (8) aus einem die elektromagnetische Strahlung zurückhaltendem Material, insbesondere aus Aluminium, bestehen.

10. Verteilerschrank bzw. Bausatz nach einem der vorhergehenden Ansprüche,
**dadurch gekennzeichnet, daß**
an dem Zwischenboden (11) in inniger Anlage an diesem wenigstens ein nach unten, in Richtung auf den Korpus (3) hin abragender, unterer Kühlkörper (14) mit einer großen Oberfläche, insbesondere mit Kühlrippen (16) aus einem Material mit guter Wärmeleitfähigkeit, insbesondere aus Aluminium, angeordnet ist, und insbesondere an der gleichen Stelle wie der untere Kühlkörper (14) jedoch auf der Oberseite des Zwischenbodens (11) ein oberer Kühlkörper (15) in inniger Anlage an den Zwischenboden angeordnet ist, der aus einem Material mit guter Leitfähigkeit, insbesondere Aluminium, besteht und eine große Oberfläche aufweist, insbesondere Kühlrippen aufweist, und insbesondere mit dem unteren Kühlkörper (14) identisch ist, und insbesondere die Kühlrippen (16) des oberen und/oder unteren Kühlkörpers (15) bzw. (14) in horizontaler Querrichtung (20) des Verteilerschrankes (1) verlaufen.

11. Verteilerschrank bzw. Bausatz nach einem der vorhergehenden Ansprüche,
**dadurch gekennzeichnet, daß**
die Kühlrippen (16) des oberen und/oder unteren Kühlkörpers (15) bzw. (14) in der Aufsicht betrachtet radial verlaufen und im Mittenbereich, insbesondere zentrisch zum geometrischen Treffpunkt der Kühlrippen (16), ein Lüfterrad (38), insbesondere ein Radial-Lüfterrad mit insbesondere in der Aufsicht gebogenen Schaufeln (39) um eine insbesondere vertikal stehende Achse (40) drehbar gelagert angeordnet ist, und insbesondere sich die Kühlkörper (14) bzw. (15) über mehr als die Hälfte der Grundrißfläche des oberen Zwischenteiles (7) erstrecken.

12. Verteilerschrank bzw. Bausatz nach einem der vorhergehenden Ansprüche,
**dadurch gekennzeichnet, daß**
die Schlitze (13) am Übergang zwischen dem oberen Zwischenteil (7) und dem Deckel (5) durch Aufsetzen des Deckels so entstehen, indem in diesem Bereich der Rand (12) gegenüber dem darauf aufsitzenden Deckel (5) abschnittsweise nach innen rückversetzt ist, und die dadurch entstehenden Schlitze (13') in horizontaler Richtung vom Deckel (5) überlappt werden.

13. Verteilerschrank bzw. Bausatz nach einem der vorhergehenden Ansprüche,
**dadurch gekennzeichnet, daß**
im Zwischenboden (11) eine Funktionsöffnung (17) angeordnet ist, zum Einsetzen einer Vielzahl von Funktionsteilen, beispielsweise automatisch schließbarer Funktionsdeckel (18), Wärmetauscher (19), Lüfter (21), mit Luftfilter (22) und EMV-Filter (23), und insbesondere der Zwischenboden (31) mehrere Kabeldurchgangsöffnungen verteilt über seine Fläche aufweist.

14. Verteilerschrank bzw. Bausatz nach einem der vorhergehenden Ansprüche,
**dadurch gekennzeichnet, daß**
das untere Zwischenteil (8) wannenförmig ausgebildet ist und einen Zwischenboden (31), einen umlaufenden Rand (32) und insbesondere Luftaustrittsöffnungen (33) aufweist, und insbesondere der Zwischenboden (31) des unteren Zwischenteiles (8) eine Funktionsöffnung (27) zum darin Befestigen einer Vielzahl von Funktionselementen aufweist, und insbesondere der Zwischenboden (31) im unteren Höhenbereich des Randes (32) angeordnet ist.

15. Verteilerschrank bzw. Bausatz nach einem der vorhergehenden Ansprüche,
**dadurch gekennzeichnet, daß**
die Austrittsöffungen (33) in dem nach unten offenen Rand (32) entstehen durch Aufsetzen des unteren Zwischenteiles (8) auf den Sockelkasten (2), indem der obere Rand des Sockelkastens (2) wenigstens teilweise radial nach innen zurückversetzt ist gegenüber dem unteren Rand des unteren Zwischenteiles (8).

16. Verteilerschrank bzw. Bausatz nach einem der vorhergehenden Ansprüche,
**dadurch gekennzeichnet, daß**
der Verteilerschrank (1) eine EMV-Abschirmung, betreffend den Hauptraum im Inneren des Korpus (3), aufweist, und insbesondere die EMV-Abschirmung im Korpus (3) vorhanden ist oder an den Innenflächen des Korpus (3) oder an den Außenflächen des Montagerahmens (6) und zusätzlich die oberen und unteren Horizontalflächen des Korpus (3) abgeschirmt sind, und insbesondere die obere horizontale Abschirmung durch das obere Zwischenteil (7) bewirkt wird und/oder die untere horizontale Abschirmung durch das untere Zwischenteil (8) bewirkt wird, und insbesondere die untere horizontale EMV-Abschirmung durch eine Bodenplatte (25) aus einem elektromagnetische Strahlung abschirmendem Material bewirkt wird, welche insbesondere am Korpus (3) befestigt ist, und insbesondere die EMV-Abschirmung aus einer Materialbeimischung in den Kunststoff des Korpus, aus einer Beschichtung der Innenflächen des Korpus oder aus einem Gewebe oder aus Blechen, insbesondere Lochblechen, die insbesondere auf den Außenseiten des Montagerahmens (6) und/oder den Innenseiten des Korpus (3) bzw. der Tür (4) montiert sind, besteht und dabei jeweils elektromagnetische Strahlung zurückhaltende Materialien, insbesondere Metalle, verwendet werden.

17. Verfahren zum Umrüsten eines Verteilerschrankes für die Aufnahme von Schwachstromverteilanlagen, mit
- einem Sockelkasten (2),
- einem Korpus (3),
- einem Deckel (5)
**dadurch gekennzeichnet, daß**
- der Deckel und der Korpus (3) von einem auf dem Sockelkasten (2) direkt oder indirekt montierten Montagerahmen (6), an bzw. in dessen Inneren Funktionsteile montiert und elektrisch angeschlossen sind, nach oben abgezogen werden und
- ein neuer, Insbesondere EMV-dichter Korpus, von oben aufgeschoben, und
- ein Zwischenteil (7) mit einem umlaufenden, nach oben aufragenden Rand zwischen dem neuen Korpus und dem darauf aufzusetzenden Deckel (5) gesetzt wird.

18. Verfahren zum Umrüsten eines Verteilerschrankes für die Aufnahme von Schwachstromverteilanlagen, mit
- einem Sockelkasten (2),
- einem Korpus (3),
- einem Deckel (5)
**dadurch gekennzeichnet, daß**
- der Deckel und der Korpus (3) von einem auf dem Sockelkasten (2) direkt oder indirekt montierten Montagerahmen (6), an bzw. in dessen Inneren Funktionsteile montiert und elektrisch angeschlossen sind, nach oben abgezogen werden,
- die notwendigen Arbeiten am Montagerahmen oder den Funktionsteilen des Verteilerschrankes durchgeführt, insbesondere eine EMV-Abschirmung angebracht wird,
- anschließend der Korpus (3) wieder von oben über den Montagerahmen aufgeschoben wird, und
- ein Zwischenteil (7) mit einem umlaufenden, nach oben aufragenden Rand zwischen dem Korpus (3) und dem darauf aufzusetzenden Deckel (5) gesetzt wird.

## Claims

1. A switch cabinet (1) for enclosing low power switch equipment, in particular for out-of-door mounted ones, with
- a base plate box (2),
- a cabinet body (3) having at least one door (4),
- a cabinet lid (5),
- a superior intermediate component (7) which is interposed between the superior edge of the cabinet body (3) and the cabinet lid (5), and which has at least an intermediate plate (11) as well as an all around extending lateral edge (12), and when arranging the cabinet lid (5) as well as the cabinet body (3) it has orifices to allow the ambient drafts getting in and out,
- whereupon at least the cabinet body (3) and/or the bas plate box (2) and/or the cabinet lid (5) and/or the door or the doors (4) are made of plastic, **characterized in that**
- it is endowed with a mounting frame (6) employed to enclose electrical constructive units inside the cabinet body, and
- the superior intermediate component (7) has an all around extending upwardly jutting edge (12).

2. A switch cabinet according to claim 1, **characterized in that** at least the cabinet body (3) and/or the base plate box (2) and/or the cabinet lid (5) and/or the door or the doors (4) are made by plastic injection.

3. A switch cabinet according to claim 1 or 2, **characterized in that** at the rear side, the mounting frame (6) as seen in the transverse direction does not have end cuts with the cabinet body (3), thus that there is possible to lift upwardly the cabinet body (3) even if the mounting frame (6) remains on the base plate box (2) with all the components attached there, and in particular alongside the mounting frame (6) there is arranged a horizontally displaceable frame shaped constructive units support (9) to attach there the electrical constructive units.

4. A constructive principle for realizing a switch cabinet employed to enclose low power switch equipment and which in particular is to be mounted out-of-door, with
- a base plate box (2),
- a cabinet body (3) having at least one door (4),
- a cabinet lid (5),
- a superior intermediate component (7) which may be interposed between the superior edge of the cabinet body (3) and the cabinet lid (5), and which has at least an intermediate plate (11) as well as an all around extending lateral edge (12), and when arranging the cabinet lid (5) as well as the cabinet body (3) it has orifices to allow the ambient drafts getting in and out,
- whereupon at least the cabinet body (3) and/or the base plate box (2) and/or the cabinet lid (5) and/or the door or the doors (4) are made of plastic, while the cabinet lid (5) is always made of plastic, **characterized in that**
- it is endowed with a mounting frame (6) employed to enclose electrical constructive units, and
- the superior intermediate component (7) has an all around extending upwardly jutting edge (12)

5. A constructive principle according to claim 4, **characterized in that** at least the cabinet body (3) and/or the base plate box (2) an/or the cabinet lid (5) and/or the door or the doors are made by plastic injection.

6. A constructive principle according to claim 4, **characterized in that** the cabinet lid (5) is always made of polycarbonates.

7. A constructive principle according to claims from 4 to 6, **characterized in that** at the rear side, the mounting frame (6) as seen in the transverse direction does not have end cuts with the cabinet body (3), thus that there is possible to lift upwardly the cabinet body (3) even if the mounting frame (6) remains on the base plate box (2) with all the components attached there.

8. A switch cabinet and a constructive principle respectively according to any one of the preceding claims, **characterized in that** the all around extending lateral edge (12) is vertically shaped, and the orifices to allow the getting in and out respectively of the ambient drafts are shaped as slots (13), whereupon the slots (13) are made in the edge (12) above the intermediate plate (11)

9. A switch cabinet and a constructive principle respectively according to any one of the preceding claims, **characterized in that** the switch cabinet (1) has an inferior intermediate component (8), which is interposed between the inferior edge of the mounting frame (6) and the superior edge of the base plate box (2), and in particular the superior intermediate component (7) and/or the inferior intermediate component (8) are made of a material impervious to electromagnetic radiation, in particular of aluminium.

10. A switch cabinet and a constructive principle respectively according to any one of the preceding claims, **characterized in that** inside the cabinet, under the intermediate plate (11) there is arranged at least an inferior cooling radiator (14), jutting downwardly in the cabinet body (3) direction, having a great surface, in particular endowed with fins (16) made of a material with enhanced thermal conduction properties, in particular aluminium, and in particular in the same place with the inferior cooling radiator (14) but on the superior side of the intermediate plate (11), inside the cabinet, on the intermediate plate there is arranged a superior cooling radiator (15) made of a material with enhanced thermal conduction properties, in particular aluminium, having a great surface, in particular endowed with fins, and in particular it is identical with the inferior cooling radiator (14), and in particular the fins (16) of the superior and/or inferior cooling radiator (15) and (14) respectively are extending in the horizontal transverse direction (20) of the switch cabinet (1).

11. A switch cabinet and a constructive principle respectively according to any one of the preceding claims, **characterized in that** the fins (16) of the superior and/or inferior cooling radiator (15) and (14) respectively, as seen in an upper view, are radially extending while in the central area, in particular central with respect to the geometrical intersection point of the fins (16), about a shaft (40), in particular vertically there is arranged a fanning wheel (38), rotatingly mounted, in particular a radial fanning wheel with blades (39), in particular curved as seen in an upper view, and in particular the cooling radiators (14) and (15) respectively are extending over more than half of the superior intermediate component (7) base section.

12. A switch cabinet and a constructive principle respectively according to any one of the preceding claims, **characterized in that** on passing between the superior intermediate component (7) and the cabinet lid (5), by arranging the lid, there are made the slots (13) **in that** in this area the edge (12) as seen in a section is inwardly displaced with respect to the cabinet lid (5) seating on it, while the cabinet lid (5) is superimposed in the horizontal direction upon the slots (13') thus made.

13. A switch cabinet and a constructive principle respectively according to any one of the preceding claims, **characterized in that** in the intermediate plate (11) there is arranged a functional orifice (17), employed to insert more functional elements, for example a functional lid (18) which may be automatically closed, a heat exchanger (19), a fan (21) with an air filter (22) and an electromagnetic radiation filter (23), and in particular the intermediate plate (11) has more cable passing orifices arranged over its entire surface.

14. A switch cabinet and a constructive principle respectively according to any one of the preceding claims, **characterized in that** the inferior intermediate component (8) is slide valve shaped and has an intermediate plate (31), an all around extending edge (32) and in particular air entrance orifices (33), and in particular the intermediate plate (31) of the inferior intermediate component (8) has a functional orifice (27) to attach there more functional elements, and in particular the intermediate plate (31) is arranged in the inferior area of the edge (12) height.

15. A switch cabinet and a constructive principle respectively according to any one of the preceding claims, **characterized in that** the air entrance orifices (33) are formed in the edge (12), opened on its inferior side, by seating the inferior intermediate component (8) on the base plate box (2), **in that** the superior edge of the base plate box (2) is at least partially inwardly displaced with respect to the inferior edge of the inferior intermediate component (8).

16. A switch cabinet and a constructive principle respectively according to any one of the preceding claims, **characterized in that** as to the main compartment inside the cabinet body (3), the switch cabinet (1) has an electromagnetic radiation shielding, and in particular the electromagnetic radiation shielding is arranged inside the cabinet body (3) or on the interior surface of the cabinet body (3), or on the exterior surface of the mounting frame (6), and supplementary the superior and inferior horizontal surfaces of the cabinet body (3) are shielded, and in particular the superior horizontal shielding is effected by means of the superior intermediate component (7) and/or the inferior horizontal shielding is effected by means of the inferior intermediate component (8), and in particular the horizontal and inferior electromagnetic radiation shielding is effected by means of a bed plate (25) made of a material impervious to electromagnetic radiation, which in particular is attached to the cabinet body (3), and in particular the electromagnetic radiation shielding consists of a material added in the plastic the cabinet body is made of, a layer laid on the cabinet body interior surface or sheets, in particular perforated sheets, which are in particular mounted on the exterior walls of the mounting frame (6) and/or on the interior sides of the cabinet body (3) and the door (4) respectively, in each case being employed materials impervious to electromagnetic radiation, in particular metals.

17. A procedure to modernize a switch cabinet to include low power switch equipment, with
- a base plate box (2),
- a cabinet body (3),
- a cabinet lid (5), **characterized in that**
- the cabinet body and lid, (5) and (3) respectively, are lifted upwardly from a mounting frame (6) which is directly or indirectly mounted to the base plate box (2), mounting frame inside which the functional elements are mounted and electrically connected, and
- from above there is arranged over it a new cabinet body, in particular impervious to electromagnetic radiation, and
- between the new cabinet body (3) and the above arranged cabinet lid (5) there is interposed a superior intermediate component (7) having an all around extending upwardly jutting edge.

18. A procedure to modernize a switch cabinet to include low power switch equipment, with
- a base plate box (2),
- a cabinet body (3),
- a cabinet lid (5), **characterized in that**
- the cabinet body and lid, (5) and (3) respectively, are lifted upwardly from a mounting frame (6) which is directly or indirectly mounted to the base plate box (2), mounting frame inside which the functional elements are mounted and electrically connected,
- there are done the necessary works on the mounting frame or on the switch cabinet functional elements, and in particular there is arranged an electromagnetic radiation shielding,
- further on, the cabinet body (3) is again arranged from above over the mounting frame, and
- between the cabinet body (3) and the above arranged cabinet lid (5) there is interposed a superior intermediate component (7) having an all around extending upwardly jutting edge.

## Revendications

1. Armoire de distribution (1) pour l'inclusion d'installations de distribution de petit pouvoir, spécialement pour la disposition dans l'atmosphère, avec
- un boîtier de socle (2),
- un corps de l'armoire (3) avec au moins une porte (4),
- un couvercle de l'armoire (5),
- une composante intermédiaire supérieure (7) qui est disposée entre le bord supérieur (3) du corps (3) et le couvercle (5) et qui présente au moins une plaque intermédiaire (11) aussi bien qu'un bord latéral (12), tout autour et à la position du couvercle (5) aussi bien que du corps (3), elle présente des orifices pour l'entrée et la sortie des courants atmosphériques,
- où au moins le corps et/ou le boîtier de socle (2) et/ou le couvercle (5) et/ou la porte ou les portes (4) sont en plastique, **caractérisé en ce qu'**
- on prévoit un cadre de montage (6) qui sert pour la position d'un groupe constructif électrique à l'intérieur du corps et,
- la composante intermédiaire (7) présente un bord (12), orienté en haut, tout autour.

2. Armoire de distribution selon la revendication 1, **caractérisé en ce qu'** au moins le corps et/ou le boîtier de socle (2) et/ou le couvercle (5) et/ou la porte ou les portes (4) sont réalisés par injection de matière plastique.

3. Armoire de distribution selon la revendication 1 ou 2, **caractérisé en ce que** dans la partie postérieure, le cadre de montage (6) regardé en direction transversale ne présente pas de coupes aux bouts avec le corps (3) de sorte qu'il soit possible le déplacement en haut du corps (3), même si le cadre de montage (6) reste sur le boîtier de socle (2) avec toutes les composantes fixées de celui-ci et spécialement au long du cadre de montage (6) est placé un support du groupe constructif (9) en forme de cadre, qui peut être déplacé en direction horizontale pour la fixation des groupes constructifs électriques.

4. Principe constructif pour la réalisation d'une armoire de distribution qui sert pour l'inclusion d'installations de distribution de petit pouvoir qui suivent être placées spécialement en atmosphère, avec
- un boîtier de socle (2),
- un corps de l'armoire (3) avec au moins une porte (4),
- un couvercle de l'armoire (5),
- une composante intermédiaire supérieure (7) qui peut être disposée entre le bord supérieur (3) du corps (3) et le couvercle (5) et qui présente au moins une plaque intermédiaire (11) aussi bien qu'un bord latéral (12), tout autour et à la position du couvercle (5) aussi bien que du corps (3) elle présente des orifices pour l'entrée et la sortie des courants atmosphériques,
- où au moins le corps et/ou le boîtier de socle (2) et/ou le couvercle (5) et/ou la porte ou les portes (4) sont en plastique et le couvercle de l'armoire (5) est chaque fois en plastique, **caractérisé en ce qu'**
- on prévoit un cadre de montage (6) qui sert pour la position de groupes constructifs électriques et,
- la composante intermédiaire (7) présente un bord (12), orienté en haut, tout autour.

5. Principe constructif selon la revendication 4, **caractérisé en ce qu'** au moins le corps et/ou le boîtier de socle (2) et/ou le couvercle (5) et/ou la porte ou les portes (4) sont réalisés par injection de matière plastique.

6. Principe constructif selon la revendication 4, **caractérisé en ce que**, le couvercle de l'armoire (5) est chaque fois en polycarbonate.

7. Principe constructif selon la revendication 4 à 6, **caractérisé en ce que**, dans la partie postérieure le cadre de montage (6) regardé en direction transversale ne présente pas de coupes aux bouts avec le corps (3) de sorte qu'il soit possible le déplacement en haut du corps (3), même si le cadre de montage (6) reste sur le boîtier de socle (2) avec toutes les composantes fixées de celui-ci.

8. Armoire de distribution respectivement principe constructif selon l'une des revendications antérieures, **caractérisé en ce que**, le bord latéral (12), tout autour est formé verticalement et les orifices pour l'entrée respectivement la sortie des courants atmosphériques sont formés comme des fentes (13), où les fentes (13) sont prévues dans le bord (12), au-dessus de la plaque intermédiaire (11)

9. Armoire de distribution respectivement principe constructif selon l'une des revendications antérieures, **caractérisé en ce que**, l'armoire de distribution (1) présente une composante intermédiaire inférieure (8) qui est placée entre le bord inférieur du cadre de montage (6) et le bord supérieur du boîtier de socle (2) et spécialement la composante intermédiaire supérieure (7) et/ou la composante intermédiaire inférieure (8) sont réalisées d'une matière qui arrête les radiations électromagnétiques, spécialement en aluminium.

10. Armoire de distribution respectivement principe constructif selon l'une des revendications antérieures, **caractérisé en ce qu'** à l'intérieur de l'installation sur la plaque intermédiaire (11) est placé au moins un radiateur de refroidissement inférieur (14) orienté en bas dans la direction du corps (3) avec une grande surface, spécialement avec des ailettes de refroidissement (16) en une matière avec une conductibilité thermique augmentée, spécialement en aluminium et spécialement dans la même place comme radiateur de refroidissement inférieur (14), mais sur la partie supérieure de la plaque intermédiaire (11) à l'intérieur de l'installation sur la plaque intermédiaire est placée un radiateur de refroidissement supérieur (15) qui est réalisé d'une matière avec propriétés augmentées de conductibilité thermique, spécialement en aluminium et qui présente une grande surface, spécialement il présente des ailettes de refroidissement et spécialement celui-ci est identique avec le radiateur de refroidissement inférieur (14) et spécialement les ailettes de refroidissement (16) du radiateur de refroidissement supérieur et/ou inférieur (15) respectivement (14) se déroulent dans la direction transversale horizontale (20) de l'armoire de distribution (1)

11. Armoire de distribution respectivement principe constructif selon l'une des revendications antérieures, **caractérisé en ce que**, les ailettes de refroidissement (16) du radiateur de refroidissement supérieur et/ou inférieur (15) respectivement (14) regardées en vue d'en haut se déroulent sur la direction radiale et dans la zone centrale, spécialement dans une position centrale par rapport au point géométrique d'intersection des ailettes de refroidissement (16), autour un axe (40), spécialement en position verticale est disposée une poulie de ventilation (38) montée avec la possibilité de tourner, spécialement une poulie de ventilation radiale à palettes (39), spécialement de forme courbée dans la vue d'en haut et spécialement les radiateurs de refroidissement (14) respectivement (15) s'étendent sur plus de la moitié de la section de base de la composante intermédiaire supérieure (7)

12. Armoire de distribution respectivement principe constructif selon l'une des revendications antérieures, **caractérisé en ce qu'** au passage entre la composante intermédiaire supérieure (7) et le couvercle (5), par la position du couvercle on crée des fentes (13), par ce que dans cette zone le bord (12) vu en section est déplacé vers l'intérieur par rapport au couvercle (5) qui est assis sur celui-ci et le couvercle (5) se superpose dans la direction horizontale sur les fentes (13') crées de cette manière.

13. Armoire de distribution respectivement principe constructif selon l'une des revendications antérieures, **caractérisé en ce que**, dans la plaque intermédiaire (11) est placée un orifice fonctionnel (17) pour l'introduction de plusieurs éléments fonctionnels, par exemple un couvercle fonctionnel (18) qui peut être fermé automatiquement, un échangeur de chaleur (19), un ventilateur (21), un filtre à air (22) et un filtre à radiations électromagnétiques (23) et spécialement la plaque intermédiaire (11) présente plusieurs orifices de passage pour le câble, repartis sur toute sa surface.

14. Armoire de distribution respectivement principe constructif selon l'une des revendications antérieures, **caractérisé en ce que**, la composante intermédiaire inférieure (8) est en forme de vanne et elle présente une plaque intermédiaire (31), un bord (32), tout autour et spécialement des orifices de sortie pour l'air (33) et spécialement la plaque intermédiaire (31) de la composante intermédiaire inférieure (8) présente un orifice fonctionnel (27) pour la fixation dans celui-ci de plusieurs éléments fonctionnels et spécialement la plaque intermédiaire est placée dans la zone inférieure de l'hauteur du bord (12)

15. Armoire de distribution respectivement principe constructif selon l'une des revendications antérieures, **caractérisé en ce que**, les orifices de sortie (33) se créent dans le bord (32), ouvert dans la partie inférieure par la position de la composante intermédiaire inférieure (8) sur le boîtier de socle (2), par ce que le bord supérieur du boîtier de socle (2) est au moins partiellement déplacé vers l'intérieur par rapport au bord inférieur de la composante intermédiaire inférieure (8)

16. Armoire de distribution respectivement principe constructif selon l'une des revendications antérieures, **caractérisé en ce que**, en ce qui concerne le compartiment principal dans l'intérieur du corps (3), l'armoire de distribution (1) présente un blindage contre les radiations électromagnétiques et spécialement le blindage contre les radiations électromagnétiques se trouve dans le corps (3) ou sur la surface intérieure du corps (3) ou sur la surface extérieure du cadre de montage (6) et dans un mode supplémentaire les surfaces, horizontale supérieure et inférieure du corps (3) sont blindées et spécialement le blindage horizontal supérieur se réalise par la composante intermédiaire supérieure (7) et/ou le blindage horizontal inférieur se réalise par la composante intermédiaire inférieure (8) et spécialement le blindage contre les radiations électromagnétiques, horizontal inférieur se réalise par une plaque intermédiaire (25) qui est d'une matière qui ecranne contre les radiations électromagnétiques qui, spécialement est fixée sur le corps (3) et spécialement le blindage contre les radiations électromagnétiques consiste d'un supplément de matière dans la matière plastique du corps, d'un recouvrement appliqué sur la surface intérieure du corps ou d'un tissu ou une tôle, spécialement des tôles perforées qui sont montées spécialement sur les parties extérieures du cadre de montage (6) et/ou sur les parties intérieures du corps (3) respectivement de la porte (4) et on utilise en chaque cas des matières qui arrêtent la radiation électromagnétique, spécialement des métaux.

17. Procédé pour l'équipement d'une armoire de distribution pour l'inclusion d'installations de distribution de petit pouvoir, avec
- un boîtier de socle (2),
- un corps (3),
- un couvercle (5), **caractérisé en ce que**,
- le couvercle et le corps (3) sont déplacés en haut sur un cadre de montage (6) qui est monté directement ou indirectement sur le boîtier de socle (2) et dans l'intérieur de celui-ci sont montés et connectés de manière électrique les composantes fonctionnelles et
- d'en haut se positionne par-dessus un nouveau corps, spécialement étanche aux radiations électromagnétiques et
- entre le nouveau corps et le couvercle (5), assise dessus s'interpose une composante intermédiaire (7) avec un bord sorti en haut, tout autour.

18. Procédé pour l'équipement d'une armoire de distribution pour l'inclusion d'installations de distribution de petit pouvoir, avec
- un boîtier de socle (2),
- un corps (3),
- un couvercle (5), **caractérisé en ce que**,
- le couvercle et le corps (3) sont déplacés en haut sur un cadre de montage (6) qui est monté directement ou indirectement sur le boîtier de socle (2) et dans l'intérieur de celui-ci sont montés et connectés de manière électrique les composantes fonctionnelles et
- on exécute les travaux nécessaires au cadre de montage ou aux éléments fonctionnels de l'armoire de distribution, spécialement on entremet un blindage contre les radiations électromagnétiques
- en continuation on positionne de nouveau le corps (3) d'en haut, sur le cadre de montage et
- entre le corps (3) et le couvercle (5) assise dessus s'interpose une composante intermédiaire (7) avec un bord sorti en haut, tout autour.
